# EUROPÄISCHE PATENTSCHRIFT

(11) **EP 1 717 099 B1**
(45) Veröffentlichungstag und Bekanntmachung des Hinweises auf die Patenterteilung: **20.11.2013**
(21) Anmeldenummer: 06008913.3
(22) Anmeldetag: 28.04.2006
(51) Int. Cl.: B60N 2/48

(54) **Kopfstütze für Fahrzeugsitze**
Headrest for vehicle seats
Appui-tête pour sièges de véhicule

(30) Priorität: 28.04.2005 DE 102005020276
(43) Veröffentlichungstag der Anmeldung: 02.11.2006
(73) Patentinhaber: GRAMMER AG, 92224 Amberg (DE)
(72) Erfinder: Otto, Doreen, 47119 Duisburg (DE); Schulz-Lekies, Detlef, 40882 Ratingen (DE)
(74) Vertreter: Roche, von Westernhagen & Ehresmann

(56) Entgegenhaltungen:
- WO-A-94/15815
- DE-A1- 3 109 592
- DE-A1- 10 035 972
- DE-U1-202004 018 216
- US-A1- 2001 000 419

## Beschreibung

Die Erfindung betrifft eine Kopfstütze für Fahrzeugsitze gemäß dem Oberbegriff des Anspruches 1.

Eine solche Kopfstütze ist bekannt aus der DE 029 450 60 C2. Die bekannte Kopfstütze ist mit einer Neigeverstellung versehen, so dass sie um eine Achse Z verschwenkt werden kann. Zudem ist eine Höhenverstellung vorgesehen, mit der der Polsterträger in der Höhe einstellbar ist und auf diese Weise in Kopfhöhe des Fahrers justiert werden kann.

Aus der Patentanmeldung DE 10 2004 059 237 ist eine Kopfstütze bekannt, bei der zusätzlich zur Höhenverstellung eine Verstellung der Kopfstütze in Sitzrichtung möglich ist.

Aus der DE 2004 018 216 U1 ist ferner eine Kopfstütze bekannt, bei der zusätzlich zur Höhenverstellung eine Neigeverstellung möglich ist.

Diesen Kopfstützen aus dem Stand der Technik ist jedoch gemeinsam, dass sie je nach Verstellmöglichkeiten völlig unterschiedliche Ausgestaltungen der Kopfstütze vorsehen, da die Automobilhersteller für die einzelnen Fahrzeugmodelle jeweils Kopfstützen mit unterschiedlichen Verstell- und Halterungsmöglichkeiten einsetzen. Die Kopfstützen müssen deshalb an die jeweiligen Fahrzeugmodelle angepasst werden. Die bekannten Kopfstützen sind aus diesem Grund verbesserungswürdig, da ein bestimmter Kopfstützentyp jeweils nur ganz spezielle Verstellmöglichkeiten bzw. Funktionselemente vorsieht.

Ausgehend von dem letztgenannten Stand der Technik ist es daher Aufgabe der Erfindung, eine Kopfstütze zu schaffen, die eine flexible Anpassung an die Verstell- und Ausstattungserfordernisse der einzelnen Fahrzeugmodelle gestattet.

Die Aufgabe wird gelöst mit den Merkmalen des Anspruches 1, insbesondere mit den kennzeichnenden Merkmalen, wonach ein und dieselbe, d.h. unveränderte, Bauform des Grundelements für unterschiedliche Anwendungsfälle einsetzbar ist, wobei das Grundelement voneinander unabhängige, für den jeweiligen Anwendungsfall etwa baukastenartig fakultativ bestückbare Aufnahmemittel aufweist, weiche die Halterung von Lagerelementen für das Verbindungselement sowie die Halterung von Verstellelementen, insbesondere zur Vertikal-, Horizontal- und Neigeverstellung, gestatten.

Das Prinzip der Erfindung besteht daher im Wesentlichen darin, dass ein Grundelement vorgesehen ist, welches unterschiedliche Aufnahmemittel zur optionalen Halterung verschiedener Verstellelemente oder Lagerelemente vorsieht. Solche Verstellelemente können beispielsweise Arretierungselemente oder Elemente eines elektrischen Antriebs für eine Höhenverstellung, eine Neigeverstellung sowie eine Verstellung in Sitzrichtung und auch Stellvorrichtungen zum automatischen Verstellen der Kopfstütze sein. Lagerelemente können Elemente sein, mit welchen beispielsweise das Grundelement an den Tragstangen gelagert ist oder der Polsterträger zur Verstellung in Sitzrichtung am Grundelement gelagert ist.

Der Vorteil der erfindungsgemäßen Kopfstütze besteht darin, dass die Verstell- und Lagerelemente je nach den Erfordernissen des Einsatzes flexibel eingesetzt oder weggelassen werden können. Die Teilevielfalt zum Herstellen nimmt auf diese Weise erheblich ab, was zu einer Reduzierung der Fertigungs- und Lagerkosten führt. Zudem besteht die Möglichkeit der Nachrüstung bestimmter Kopfstützen-Merkmale, was beim Stand der Technik nicht möglich war.

Gemäß einer Ausgestaltung der Erfindung weist das Grundelement zusätzliche Aufnahmemittel zur Halterung von Funktionselementen, wie Kopfstützen-Airbag oder Kopfstützen-Lautsprecher, auf. Das Grundelement ist somit bereits mit solchen Halterungen versehen, so dass die Funktionselemente optional und unabhängig voneinander entsprechend der jeweiligen Kopfstützen-Ausstattung eingesetzt werden können. Derartige Ausstattungselemente können z.B. ein Kopfstützen-Airbag, Kopfstützen-Lautsprecher oder -Mikrophon, eine Heizung oder ähnliches sein.

Gemäß einer Ausgestaltung der Erfindung weist das Grundelement eine Lagervorrichtung für das Verbindungselement auf, die zugleich eine starre, wie eine bewegliche Aufnahme der Tragstangen zur Höhenverstellung der Kopfstütze ermöglicht. Die Tragstangen können demnach unverschieblich in den Aufnahmelegern aufgenommen und starr am Grundelement befestigt sein oder aber verschiebbar innerhalb der Lagervorrichtung aufgenommen sein. Im letzteren Fall ist eine Höhenverstellung innerhalb des Grundelements möglich. Im ersteren Fall der starren Aufnahme kann eine Höhenverstellung in Führungshülsen der Rückenlehne vorgesehen sein oder die Kopfstütze ist nicht in der Höhe verstellbar.

Gemäß einer weiteren Ausgestaltung der Erfindung weist das Grundelement Aufnahmemittel für erste Arretierungsmittel auf, mit denen das Grundelement auf den Tragstangen in gewünschter Höhe arretierbar ist. Diese Lösung erlaubt es, bei einer am Grundelement vorgesehenen Verstellvorrichtung eine Arretierung in der gewünschten Höhe vorzunehmen. Das kann beispielsweise mittels Kerben in den Tragstangen erfolgen, in welche wenigstens mittelbar am Grundelement angeordnete Rastmittel eingreifen.

Gemäß einer weiteren Ausgestaltung der Erfindung weist das Grundelement Formschlussmittel auf, die ein Verdrehen der Tragstangen innerhalb des Grundelementes verhindern. Ein Verdrehen der Tragstangen könnte zur Folge haben, dass eine Rast- oder Verstellvorrichtung sich nicht mehr in Eingriff mit den an der Raststange befindlichen Rastkerben bzw. der Verzahnung befindet. Die Kopfstütze könnte sich dann unbeabsichtigt verstellen und würde ihrer Sicherungsfunktion nicht mehr genügen. Aus Sicherheitsgründen kann daher die Möglichkeit des Verdrehens der Tragstangen nicht toleriert werden.

Einer weiteren Ausgestaltung der Erfindung gemäß sind die Formschlussmittel von einer Nut-Federverbindung gebildet. Eine Nut-Federverbindung ist einfach herstellbar und gewährleistet somit auf kostengünstige Weise eine sichere Verhinderung der Verdrehung der Tragstangen innerhalb des Polsterträgers.

Gemäß einer weiteren Ausgestaltung der Erfindung weist das Grundelement Aufnahmemittel zur starren sowie zur in Sitzrichtung beweglichen Lagerung, zumindest eines Teils des Polsterträgers, auf. Eine solche bewegliche Lagerung des Polsterträgers in Sitzrichtung ist vorgesehen, um den Polsterträger je nach Sitzposition des Insassen möglichst nah am Kopf des Insassen anzuordnen.

Einer weiteren Ausgestaltung der Erfindung gemäß sind die Aufnahmemittel von wenigstens einer Öffnung im Grundelement gebildet, wobei die Öffnung koaxial von einer Lagervorrichtung für eine säulenartige Haltestange umgeben ist. Im Fall der in Sitzrichtung beweglichen Lagerung des Polsterträgers, kann die säulenartige Haltestange, welche am Polsterträger angeordnet ist, innerhalb der Ausnehmungen in Sitzrichtung bewegt werden. Auf diese Weise wird die Verstellbarkeit des Polsterträgers erreicht. Die Lagervorrichtung kann beispielsweise von einer am Grundelement angeformten Lagerhülse gebildet sein, welche die Öffnung koaxial umgibt. Auf diese Weise sind eine oder mehrere Haltestangen des Polsterträgers sicher am Grundelement geführt.

Einer weiteren Ausgestaltung der Erfindung gemäß weist der Polsterträger Aufnahmemittel für zweite Arretierungsmittel auf, mit welchen das Polsterträgerteil in einer gewünschten Position am Grundelement feststellbar ist. Solche Arretierungsmittel können beispielsweise von Rastkerben in der säulenartigen Haltestange gebildet sein, welche mit wenigstens mittelbar am Grundelement angeordneten Rastelementen zusammenwirken.

Einer weiteren Ausgestaltung der Erfindung gemäß sind die ersten und/oder die zweiten Arretierungsmittel einem Rastschieber zugeordnet. Der Rastschieber stellt eine einfach herzustellende und leicht zu bedienende Möglichkeit dar, die Arretierungen der Kopfstütze sowohl in Sitzrichtung als auch bei der Höhenverstellung zwischen wenigstens einer Löse- und wenigstens einer Arretierposition zu bewegen.

Gemäß einer weiteren Ausgestaltung der Erfindung weist das Grundelement eine Aufnahmevorrichtung auf, in welcher der Rastschieber geführt aufgenommen ist. Ist eine Höhenverstellung bzw. eine Verstellung in Sitzrichtung oder beides vorgesehen, kann mittels des Rastschiebers auf einfache Weise eine Arretierung der entsprechenden Verstell-Richtung vorgenommen werden. Mittels der Führung wird dem Rastschieber auf einfache Weise ein bestimmter Weg zugeordnet, welcher zum Lösen bzw. zum Verrasten der jeweiligen Arretierung notwendig ist. Im Falle einer völlig starren Kopfstütze, kann auf den Rastschieber verzichtet werden, so dass die Aufnahmevorrichtung innerhalb des Grundelementes leer bleibt.

Gemäß einer weiteren Ausgestaltung der Erfindung ist die Aufnahmevorrichtung so ausgebildet, dass der Rastschieber zwischen drei Positionen im Grundelement bewegbar ist, wobei sich in einer ersten Position die Rastmittel zum Arretieren der Tragstangen und die Rastmittel zum Arretieren der Haltestangen in Eingriff befinden und wobei sich in einer zweiten Position die Rastmittel zum Arretieren der Tragstangen außer Eingriff und die Rastmittel zum Arretieren der Haltestangen in Eingriff befinden und wobei sich in einer dritten Position die Rastmittel zum Arretieren der Tragstangen in Eingriff und die Rastmittel zum Arretieren der Haltestangen außer Eingriff befinden. Auf diese Weise ist es möglich, eine Höhenverstellung oder eine Verstellung in Sitzrichtung vorzunehmen, wobei jeweils nur eine Verstelleinrichtung freigegeben ist. Während der Einstellung der Kopfstütze in eine Richtung, kann die jeweils andere Richtung somit nicht ungewollt verstellt werden.

Einer weiteren Ausgestaltung der Erfindung gemäß weist das Grund-element Mittel zur Aufnahme wenigstens einer Verstellvorrichtung auf, welche ein automatisches Verstellen der Kopfstütze in vertikaler Richtung, in Sitzrichtung oder ein Verschwenken der Kopfstütze ermöglichen. Mit Hilfe einer solchen Verstellvorrichtung muss die Kopfstütze nicht von Hand verstellt werden, sondern wird automatisch betätigt. Die Verstellvorrichtung kann beispielsweise von einem Elektromotor gebildet sein, welcher ein Ritzel antreibt, das mit einer Verzahnung zusammenwirkt, die wenigstens mittelbar am angetriebenen Element, wie beispielsweise Tragstange oder Haltestange, angeordnet ist. Ein Getriebe der Verstellvorrichtung kann eine so große Selbsthemmung aufweisen, dass bei nicht betätigtem Elektromotor die Kopfstütze automatisch in der entsprechenden Bewegungsrichtung arretiert ist.

Gemäß einer weiteren Ausgestaltung der Erfindung sind die Tragstangen aus einem Werkstoffverbund gebildet, wobei jede der Tragstangen einen Metallkern aufweist, welcher von einem Kunststoffmantel umgeben ist. Während der Tragstangenkern eine hohe Festigkeit und Bruchsicherheit aufweist, können an den Mantel auf einfache Weise Rastkerben, Verzahnungen oder Verdrehsicherungen angeformt werden.

Gemäß einer weiteren Ausgestaltung der Erfindung ist zwischen Metallkern und Kunststoffmantel eine Verdrehsicherung vorgesehen. Auf diese Weise wird verhindert, dass die am Mantel angeformten Rastkerben oder Verzahnungen außer Eingriff mit ihren komplementären Strukturen geraten und die Sicherheit der Kopfstütze somit nicht mehr gewährleistet ist.

Gemäß einer weiteren Ausgestaltung der Erfindung ist die Verdrehsicherung von komplementären, zusammenwirkenden Strukturen in Tragstange und Mantel gebildet. So kann beispielsweise die Tragstange eine keilwellenartige Struktur aufweisen, wobei die Nuten vom Kunststoff ausgefüllt sind.

Gemäß einer weiteren Ausgestaltung der Erfindung sind die Tragstangen mittels einer Dreipunktlagerung in den Aufnahmemitteln des Grundelementes gelagert. Dabei können beispielsweise drei Lagernasen an der Tragstange angeformt sein. Alternativ ist es möglich, dass lediglich zwei Lagernasen angeformt sind und die dritte Lagernase von einer Rippe gebildet ist, welche als Verdrehsicherung in einer Nut im Aufnahmelager des Grundelementes angeordnet ist.

Einer weiteren Ausgestaltung der Erfindung gemäß ist das Grundelement von einem biegesteifen im Wesentlichen flächigen Bauteil gebildet. Dieses Bauteil kann sich beispielsweise zwischen den Tragstangen erstrecken. Für die notwendige Steifigkeit kann das Bauteil Versteifungsrippen aufweisen.

Gemäß einer weiteren Ausgestaltung der Erfindung ist das Grundelement als Kunststoff- oder als Kunststoffverbund-Formteil ausgebildet. Auf diese Weise ist das Grundelement leicht formbar und kostengünstig herstellbar.

Ausgehend von den vorgenanten Stand der Technik sowie der ebenfalls vorgenannten Aufgabe ergibt sich die Lösung auch durch die Merkmale des Anspruches 26, wonach ein und dieselbe Bauform des Grundelementes für unterschiedliche Anwendungsfälle einsetzbar ist, wobei das Grundelement von einander unabhängige, für den jeweiligen Anwendungsfall etwa baukastenartig fakultativ bestückbare Aufnahmemittel aufweist, welche die Halterung von Lagerelementen für das Verbindungselement sowie die Halterung von Verstellelementen, insbesondere zur Vertikal-, Horizontal- und Neigeverstellung, gestatten, wobei wenigstens ein Aufnahmemittel unbestückt bleibt.

Unbestückte Aufnahmemittel können oft bei vollständiger Ausrüstung der Kopfstütze zum Beispiel dadurch auftreten, dass die Bestückung eines Aufnahmemittels die Bestückung eines weiteren Aufnahmemittels ausschließt. Beispielsweise kann ein Aufnahmemittel zum Festsetzen des Grundelementes an den Tragstangen bei einer Höhenverstellung in der Rückenlehne dann unbenutzt bleiben, wenn die Höhenverstellung durch Relativverschiebung des Grundelemente an den Tragstangen vorgenommen wird, also eine Höhenverstellung in der Kopfstütze vorliegt.

Zudem betrifft die Erfindung auch ein Kopfstützensystem.

Ausgehend von dem vorgenannten Stand der Technik sowie der ebenfalls vorgenannten Aufgabe, ergibt sich die Lösung durch die Merkmale des Anspruches 27, wonach ein und dieselbe Bauform des Grundelementes für unterschiedliche Anwendungsfälle einsetzbar ist, wobei das Grundelement von einander unabhängige, für den jeweiligen Anwendungsfall etwa baukastenartig fakultativ bestückbare Aufnahmemittel aufweist, welche die Halterung von Lagerelementen für das Verbindungselement sowie die Halterung von Verstellelementen, insbesondere zur Vertikal-, Horizontal- und Neigeverstellung, gestatten, wobei bei einer ersten Kopfstütze des Kopfstützensystems alle Aufnahmemittel bestückt sind und bei einer zweiten Kopfstütze des Kopfstützensystems wenigstens ein Aufnahmemittel unbestückt bleibt.

Schließt die Bestückung eines Aufnahmemittels die Bestückung eines weiteren Aufnahmemittels nicht aus, so kann mit Hilfe des erfindungsgemäßen Kopfstützensystems bei einer Kopfstütze die Bestückung aller Aufnahmemittel vorgesehen sein, während bei einer weiteren Kopfstütze des Kopfstützensystems bestimmte Aufnahmemittel unbestückt bleiben, beispielsweise weil die entsprechenden Funktionen bei der Kopfstütze nicht gewünscht sind.

Weitere Vorteile der Erfindung ergeben sich aus den nicht zitierten Unteransprüchen sowie anhand der nachfolgenden Beschreibung von in den Zeichnungen dargestellten Ausführungsbeispielen. Es zeigen:
Fig. 1 eine Draufsicht auf die erfindungsgemäße Kopfstütze,
Fig. 2 eine Draufsicht auf eine erfindungsgemäße Kopfstütze ohne jegliche Verstellung und ohne Polsterträger,
Fig. 3 eine Kopfstütze, wobei der Polsterträger nicht dargestellt ist, mit Höhenverstellung in der Rückenlehne,
Fig. 4 eine Kopfstütze, wobei der Polsterträger nicht dargestellt ist, mit Höhenverstellung im Grundelement der Kopfstütze,
Fig. 5 eine Kopfstütze gemäß Fig. 4 in Explosionsdarstellung,
Fig. 6 eine perspektivische Darstellung einer Kopfstütze gemäß Fig. 4 mit Polsterträger,
Fig. 7 eine Schnittdarstellung der Kopfstütze gemäß der Ansichtspfeile VII-VII in Fig. 1,
Fig. 8 ein Ausschnitt gemäß der Schnittlinie VIII in Fig. 7,
Fig. 9 eine teilweise perspektivische Darstellung einer höhenverstellbaren und in Sitzrichtung verstellbaren Kopfstütze mit nicht dargestelltem Polsterträger,
Fig. 10 eine Darstellung der Kopfstütze gemäß Fig. 9 mit teilweise dargestelltem Polsterträger und
Fig. 11 die Kopfstütze gemäß Fig. 10 mit motorisch angetriebener Höhenverstellung und motorisch angetriebener Verstellung in Sitzrichtung.

In den Zeichnungen ist eine Kopfstütze für Fahrzeugsitze insgesamt mit der Bezugsziffer 10 bezeichnet. Gleiche Bezugsziffern, auch unter Ergänzung von kleinen Buchstaben in den unterschiedlichen Figuren, bezeichnen entsprechende Teile.

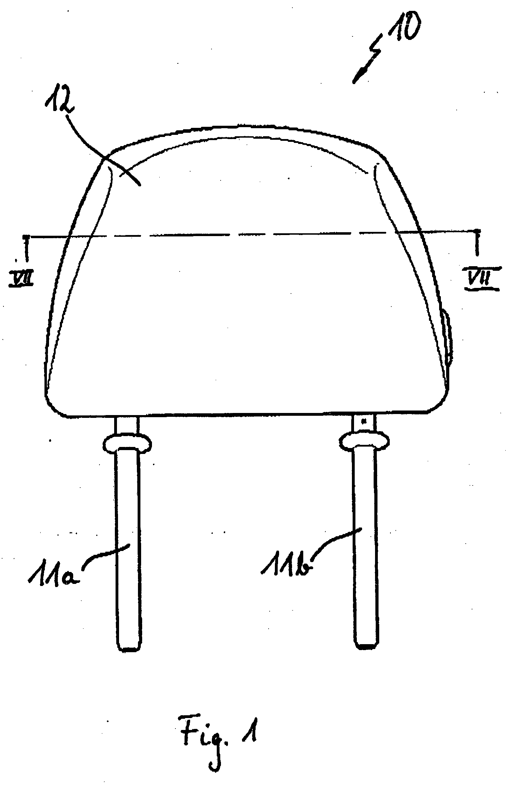

In Fig. 1 ist eine solche Kopfstütze 10 dargestellt. Die Kopfstütze 10 ist mittels zweier Tragstangen 11a und 11b an einer nicht dargestellten Rückenlehne eines Fahrzeuges angeordnet. Zur komfortablen Anlage des Kopfes eines Fahrzeuginsassen, weist die Kopfstütze 10 ein Kopfpolster 12 auf.

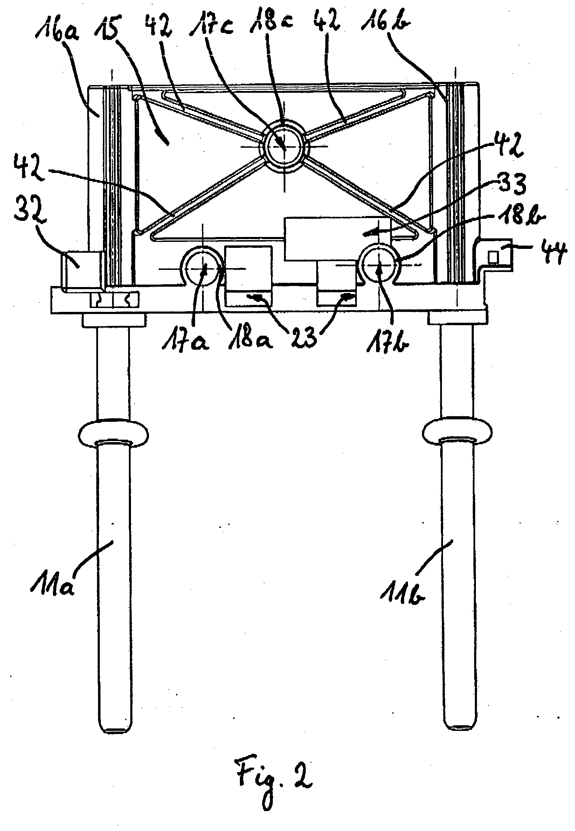

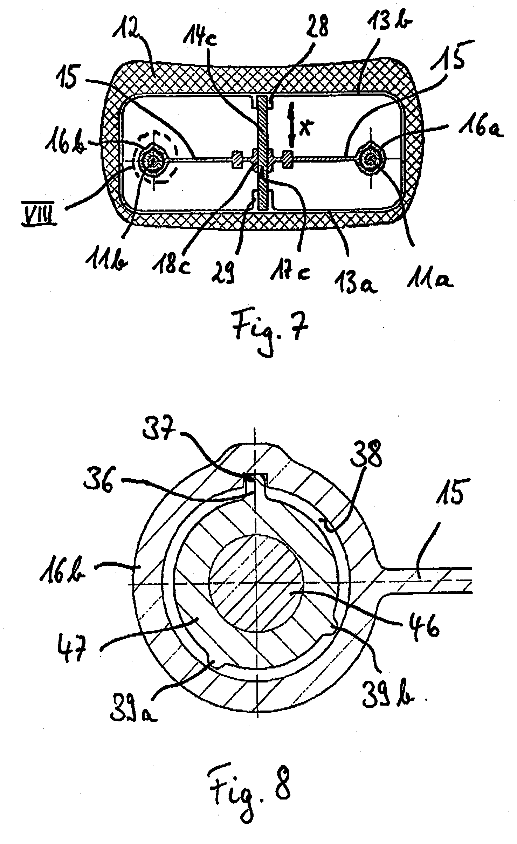

In der einfachsten Ausführungsform weist die Kopfstütze 10 keinerlei Verstellungen auf, so dass sie völlig starr in einer festgelegten Position zur Rückenlehne angeordnet ist. Eine Solche Kopfstütze 10 weist ein in Fig. 2 dargestelltes Grundelement 15 auf. Am Grundelement 15 sind zwei Lagerhülsen 16a und 16b angeformt, in denen Tragstangen 11a und 11b gemäß Fig. 8 angeordnet sind, was im Folgenden noch genauer erläutert wird. Da keine Verstellmöglichkeiten vorgesehen sind, sind in den Hülsenansätzen 18a, 18b und 18c keine Führungsstangen 14 aufgenommen und auch in dem Aufnahmelager 23 ist kein Rastschieber 22 angeordnet. Das Kopfpolster, welches in Fig. 2 nicht dargestellt ist, kann direkt an dem Grundelement 15 befestigt sein oder alternativ an einem Polsterträger 13 (in Fig. 2 ebenfalls nicht dargestellt) befestigt sein, der seinerseits am Grundelement 15 angeordnet ist. Das Grundelement 15 ist starr an den Tragstangen 11a bzw. 11b befestigt, so dass die Tragstangen 11a, 11b innerhalb der Lagerhülsen 16a und 16b nicht verschiebbar sind.

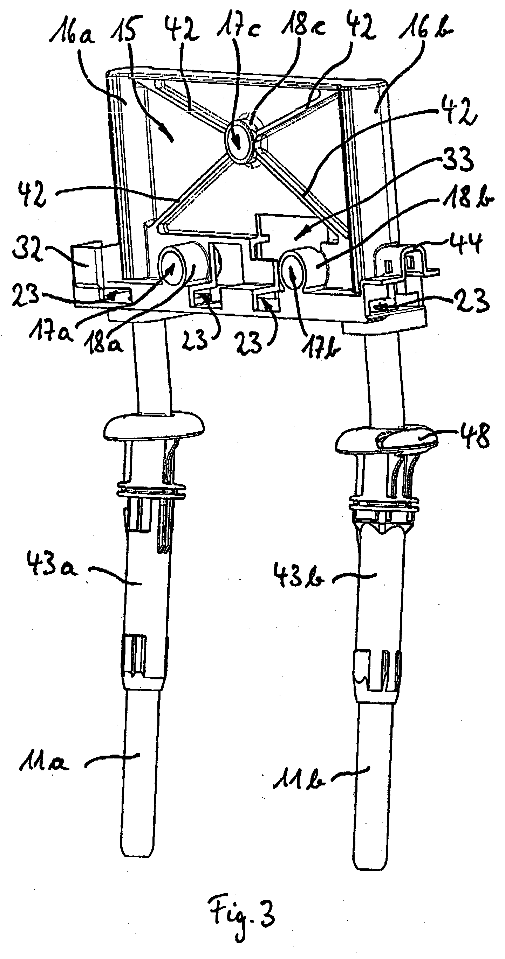

Gemäß einer weiteren Ausführungsform kann ein derart starr an den Tragstangen befestigtes Grundelement 15 dennoch in der Höhe verstellbar sein, indem gemäß Fig. 3 die Tragstangen 11 a und 11 b in Führungshülsen 43a und 43b aufgenommen sind, welche an einer nicht dargestellten Sitzstruktur einer Rückenlehne befestigt sind. Eine Arretierung in gewünschter Höhe kann vorgenommen werden, indem ein Rastelement beispielsweise an der Führungshülse 43b angeordnet ist, welches mit nicht dargestellten Rastkerben der Tragstange 11b kooperiert. Durch Druck auf die Taste 48 kann die Arretierung gelöst und die Kopfstütze in der Höhe verstellt werden.

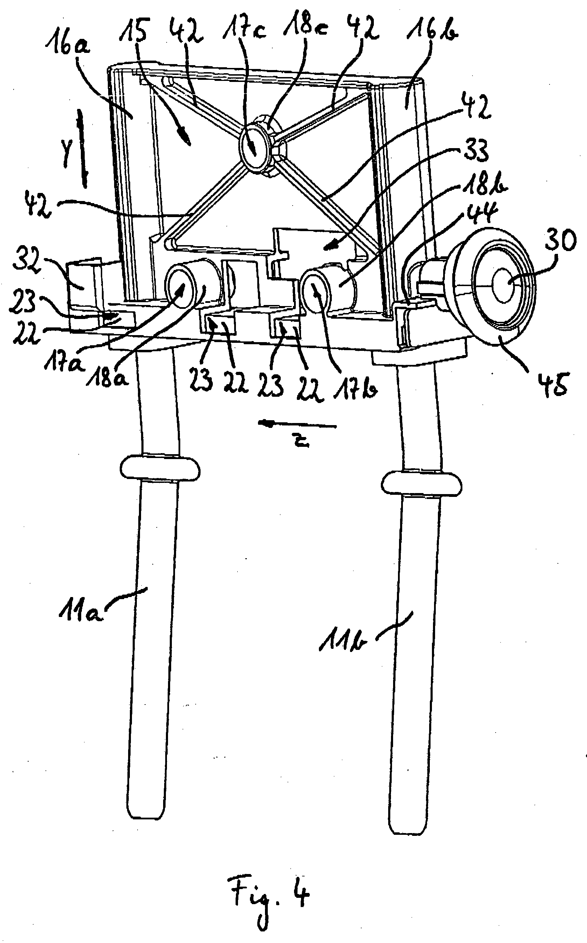

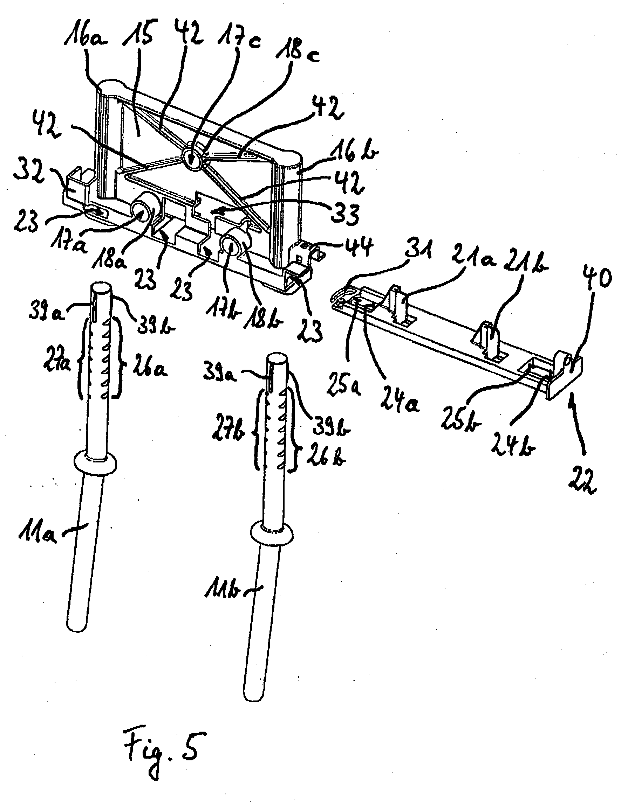

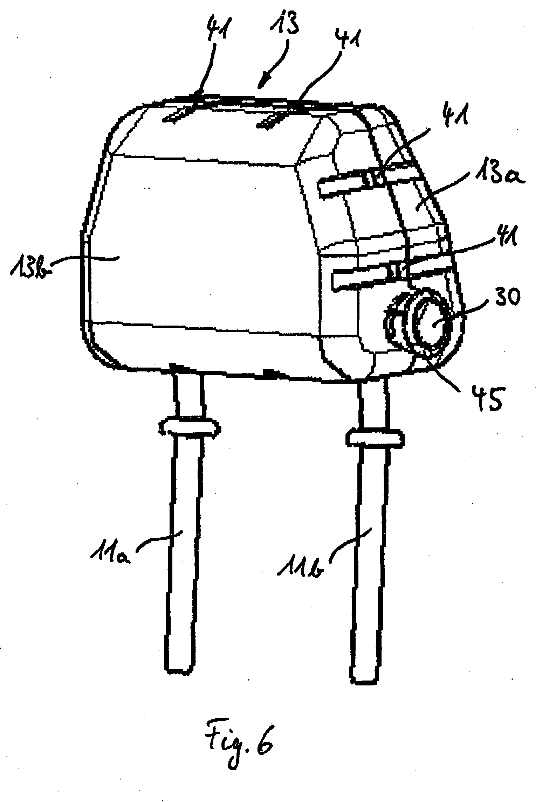

Bei der in Fig. 4 dargestellten Kopfstütze 10 ist eine Höhenverstellung vorgesehen, wobei die Höhenverstellung durch eine Bewegung des Grundelementes 15 in Richtung y relativ zu den fest an der Rückenlehnenstruktur angeordneten Tragstangen 11a und 11b erfolgt. In einem Aufnahmelager 23 des Grundelementes 15 ist ein Rastschieber 22, welcher in Fig. 5 genauer dargestellt ist, translatorisch verschiebbar angeordnet. Der Rastschieber 22, kann entgegen der Kraft eines nicht dargestellten Federelementes, mit einem Betätigungselement 30 in positive z-Richtung bewegt werden. Dabei geraten am Rastschieber 22 angeordnete Rastelemente 25a und 25b (siehe Fig. 5) außer Eingriff mit an den Tragstangen 11a und 11b angeordneten Rastkerben 27a und 27b, so dass eine Höhenverstellung der Kopfstütze vorgenommen werden kann. Da die Kopfstütze gemäß Fig. 4 keine Verstellung in Sitzrichtung vorsieht, haben die Rastelemente 21a und 21b des Rastschiebers 22 keine Funktion. Ebenfalls aus diesem Grunde sind die Öffnungen 17a, 17b und 17c des Grundelements 15 nicht mit Führungsstangen 14a, 14b und 14c bestückt. Auch bei der Kopfstütze gemäß Fig. 4 kann das Kopfpolster 12 entweder direkt am Grundelement. 15 oder aber auf einem Polsterträger 13 (siehe Fig. 6) angebracht sein.

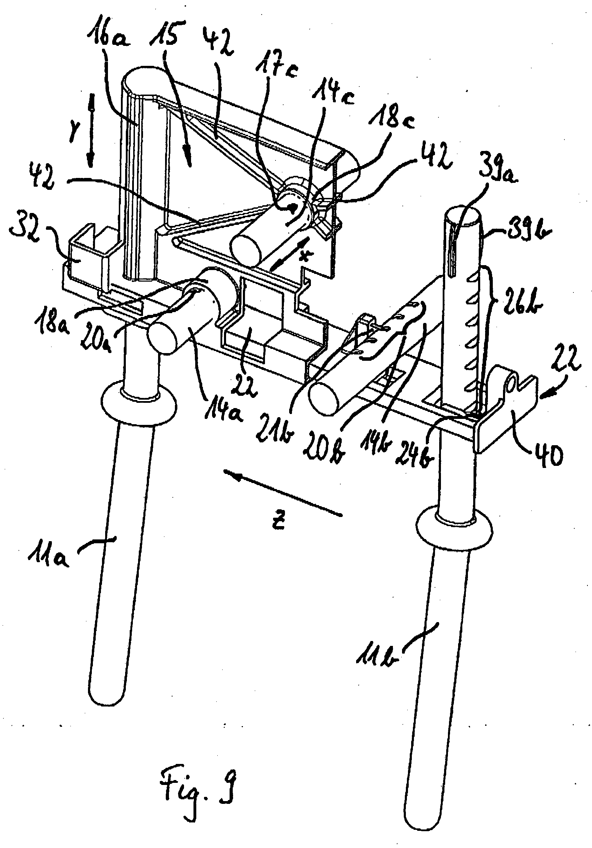

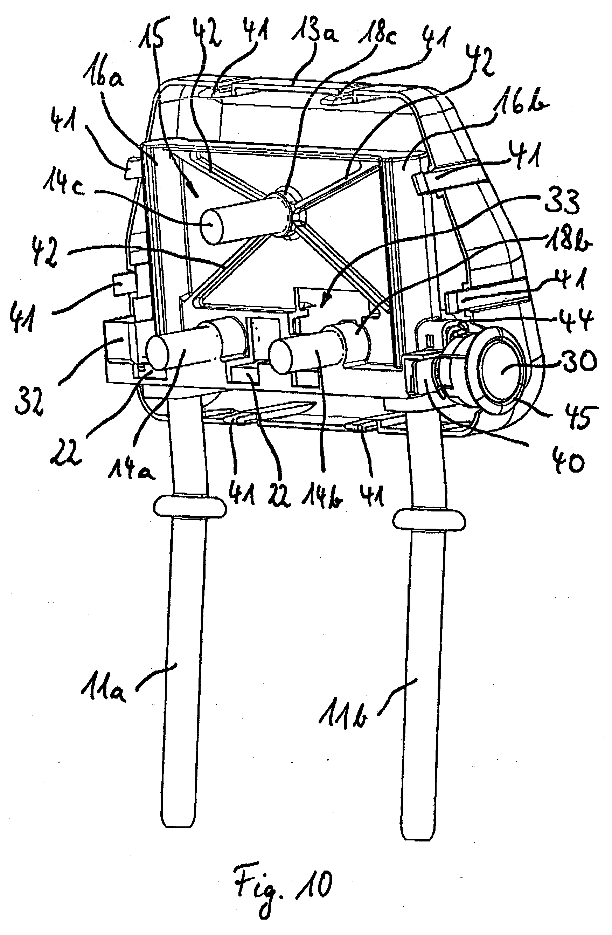

Bei einer weiteren Ausführungsform der Kopfstütze gemäß Fig. 9 ist sowohl eine Höhenverstellung als auch eine Verstellung der Kopfstütze 10 in Sitzrichtung vorgesehen. Die Höhenverstellung der Kopfstütze 10 erfolgt wiederum durch eine Relativbewegung des Grundelementes 15 zu den an der Lehnenstruktur fest angeordneten Tragstangen 11a und 11b. Bei dieser Kopfstütze ist gemäß Fig. 7 mittels säulenartiger Führungsstangen 14a, 14b und 14c der Polsterträger 13 an dem Grundelement 15 in Längsrichtung x bewegbar geführt. Auf diese Weise kann die Kopfstütze 10 auch in Sitzrichtung x verstellt und an die Kopfposition des Fahrzeuginsassen angepasst werden. Die Führungsstangen 14a, 14b und 14c durchgreifen dabei Öffnungen 17a, 17b und 17c im Grundelemertt 15 und sind jeweils in einem angeformten Hülsenansatz 18a, 18b und 18c gleitgelagert, wie in Fig. 7 und Fig. 10 dargestellt.

Die Führungsstangen 14a, 14b und 14c sind endseitig gemäß Fig. 7 in Lagern 28 und 29 des Polsterträgers 13 aufgenommen. Der Polsterträger 13 weist zwei Schalen 13a und 13b auf (siehe Fig. 7). Um die Schale 13a an der weiteren Schale 13b zu befestigen, ist die Schale 13a mit angeformten Hakenelementen 41 (siehe Fig. 6) versehen, welche formschlüssig in nicht dargestellte Rastkerben der Halbschale 13b eingreifen. Der Polsterträger 13 ist, gemäß der Darstellung in Fig. 7, mit einem Kopfpolster 12 versehen.

Um den Polsterträger 13 in einer gewünschten Position in Längsrichtung x am Grundelement 15 arretierten zu können, weisen die Führungsstangen 14a und 14b Rastkerben 20a und 20b auf, die jeweils mit Rastelementen 21 a und 21b eines Rastschiebers 22 zusammenwirken und so eine Bewegung des Polsterträgers 13 in Längsrichtung x verhindern. An dem Rastschieber 22 sind darüber hinaus Rastelemente 24a und 24b sowie 25a und 25b angeformt, welche mit Rastkerben 26a und 26b sowie 27a und 27b beidseitig jeder Tragstange 11 zusammenwirken, wie weiter unten erläutert wird. Die Rastkerben 27a und 27b sind in Fig. 5 nur ansatzweise dargestellt. Sie befinden sich an der den Rastkerben 26a und 26b gegenüberliegenden Seite der Tragstangen 11a und 11b und sind in gleicher Anzahl vorhanden, wie die Rastkerben 26a und 26b.

Auf diese Weise kann die Kopfstütze 10 mittels des Rastschiebers 22 sowohl in der Höhe als auch in Längsrichtung x arretiert und zum Einstellen gelöst werden. Dafür ist der Rastschieber 22 zwischen drei Positionen bewegbar: Einer ersten Position, in welcher Höhenverstellung und Längsverstellung arretiert sind, einer zweiten Position, in der die Höhenverstellung gelöst ist und die Längsverstellung arretiert bleibt sowie einer dritten Position, in welcher die Höhenverstellung arretiert ist, die Längsverstellung hingegen gelöst ist.

Der Rastschieber 22 ist in einem Aufnahmelager 23 des Grundelements 15 translatorisch in Richtung z verschiebbar gleitgelagert. Der Rastschieber 22 ist nur notwendig, wenn eine Höhenverstellung oder eine Längsverstellung x der Kopfstütze 10 oder beides vorgesehen ist. Bei einer Kopfstütze 10, die völlig starr ist oder eine Höhenverstellung gemäß Fig. 3 in der Rückenlehne oder lediglich eine Neigeverstellung aufweist, ist ein Rastschieber 22 nicht vorgesehen. Das Aufnahmelager 23 des Grundelements 15 bleibt in diesem Fall ungenutzt.

Am Rastschieber 22 ist ein nicht dargestelltes Federelement angeordnet, welches den Rastschieber 22 derart belastet, dass gemäß der Fig. 9 die Rastelemente 21 a und 21 b sowie 25a und 25b in Eingriff mit den Rastkerben 20a und 20b, bzw. 27a und 27b gebracht werden. In der ersten Position des Rastschiebers 22 greifen die Rastelemente 21 a, 21 b in jeweils eine der Rastkerben 20a, 20b der Führungsstangen 14a, 14b ein und verhindern eine Bewegung des Polsterträgers 13 in Längsrichtung x. Die Rastelemente 25a und 25b greifen jeweils in eine der Rastkerben 27a, 27b auf der linken Seite der Tragstangen 11 ein und verhindern somit eine Verstellung des Grundelements 15 in der Höhe (Richtung y).

Durch Druck auf ein Betätigungselement 30, welches am Flansch 40 des Rastschiebers 22 befestigt ist, wird Letzterer in positiver Richtung z entgegen der Kraft des nicht dargestellten Federelements aus der ersten Position in die zweite Position bewegt, deren Erreichen dem Benutzer durch das Anschlagen eines am Rastschieber 22 angeformten weiteren Federelements 31 (siehe Fig. 5) an einer Innenwand des Aufnahmeschachtes 23 im Grundelement 15 als Widerstand angezeigt wird. In dieser zweiten Position des Rastschiebers 22 befinden sich die Rastelemente 25a, 25b außer Eingriff mit den Rastkerben 27a und 27b, so dass eine Höhenverstellung möglich ist. Die Rastelemente 21a und 21b sind dagegen weiterhin in Eingriff mit jeweils einer der Rastkerben 20a, 20b.

Die Rastkerben 20 sind tiefer als die Rastkerben 26, deshalb löst der Verstellweg des Rastschiebers 22 von Position 1 in Position 2 die Höhenverstellung, nicht aber die Längsverstellung. Wird der Rastschieber 22 entgegen des Widerstandes der nicht dargestellten ersten Feder sowie des zusätzlichen Widerstandes des Federelements 31 in positiver z-Richtung in die dritte Position bewegt, so geraten die Rastelemente 21 außer Eingriff mit den Rastkerben 20 der Führungsstangen 14. In dieser Position befinden sich aber die Rastelement 24a und 24b in Eingriff mit den Rastkerben 26a und 26b, so dass eine Höhenverstellung nicht möglich, eine Längsverstellung dagegen möglich ist.

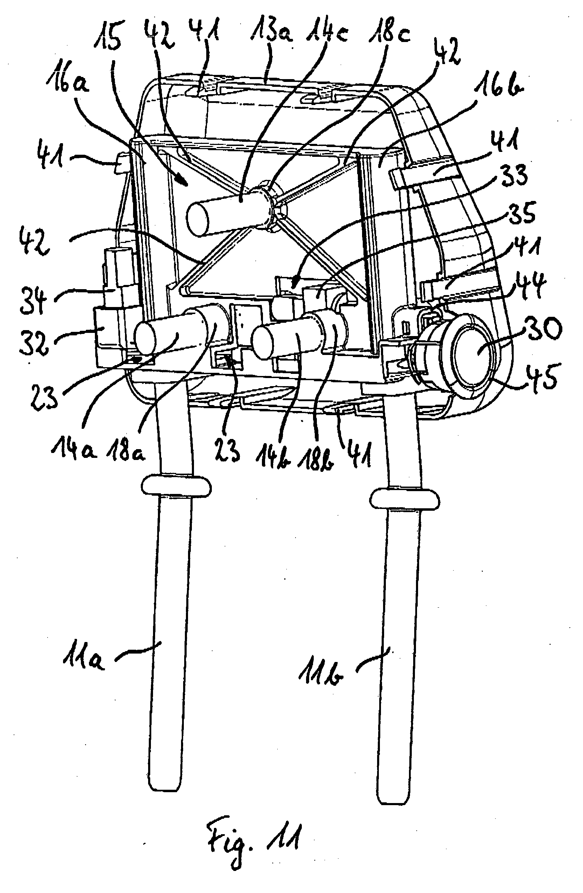

Damit die Verstellung der Kopfstütze 10 sowohl in der Höhe als auch in Sitzrichtung x nicht nur manuell, sondern auch automatisch durchgeführt werden kann, sind am Grundelement 15 Aufnahmesitze 32 und 33 vorgesehen, in denen bei der Ausführungsform der Kopfstütze 10 gemäß Fig. 11 ein elektrischer Antrieb 34 sowie ein weiterer elektrischer Antrieb 35 für die Verstellung der Kopfstütze 10 in Sitzrichtung x aufgenommen sind. Die Realisierung der automatischen Höhenverstellung kann mittels eines am elektrischen Antrieb 34 angeordneten, nicht dargestellten, Ritzels realisiert sein, welches mit einer, ebenfalls nicht dargestellten, an der Tragstange wenigstens mittelbar angeordneten Verzahnung korrespondiert. Auf die gleiche Weise kann auch die automatische Verstellung in Sitzrichtung mittels des elektrischen Antriebs 35 erfolgen.

Da bei einer Höhenverstellung der Kopfstütze 10 die Position der Kopfstütze durch den sicheren Eingriff der Rastelemente in die Rastkerben 20 sichergestellt wird, muss ein Verdrehen der Tragstangen 11 verhindert werden, weil eine solche Verdrehung zur Folge haben könnte, dass Rastelemente 21 und Rastkerben 20 außer Eingriff geraten und sich die Kopfstütze 10 ungewollt in der Höhe verstellt. In einem solchen Falle könnte die Kopfstütze 10 ihre Sicherheitsfunktion nicht mehr wahrnehmen. Gemäß Fig. 8 sind die Tragstangen 11 daher mit einer Rippe 36 versehen, die in eine Längsnut 37 eingreift, welche an der Innenfläche 38 der Lagerhülsen 16a, 16b ausgebildet ist.

Aus Fig. 8 ist ebenfalls zu entnehmen, dass die Tragstangen in Verbundbauweise hergestellt sind und einen Metallkern 46 aufweisen, welcher von einem Kunststoffmantel 47 umgeben ist. Auf diese Weise lassen sich die Rippe 36 sowie Lagernasen 39a und 39b leichter an die Tragstangen 11a und 11b anformen. Die Lagernasen 39 haben den Zweck einer leichten Höhenverstellbarkeit der Kopfstütze 10. Mittels der Lagernasen 39 und der Rippe 36 weisen die Tragstangen 11a und 11b eine Dreipunktlagerung auf, mit der sie innerhalb der Aufnahmehülsen 16a und 16b gelagert ist. Auf diese Weise tritt bei der Höhenverstellung nur ein geringer Reibwiderstand auf.

Es sei noch einmal darauf hingewiesen, dass alle erwähnten Ausführungsformen der Kopfstütze 10 das gleiche Grundelement 15 aufweisen, dessen Aufnahmemittel lediglich entsprechend der gewünschten Verstellbarkeit oder Funktion modulartig mit Zusatzbauteilen bestückbar sind.

## Patentansprüche

1. Kopfstütze (10) für Fahrzeugsitze, welche mit wenigstens einer Tragstange (11a, 11b) an der Rückenlehne eines Fahrzeugsitzes gehalten werden kann und ggf. einen Polsterträger (13) sowie ein Polster (12) für den Kopf des Fahrgastes aufweist, wobei die Kopfstütze (10) mit einem Grundelement (15) versehen ist, an welchem die Tragstange (11a, 11 b) und ggf. der Polsterträger (13) angeordnet sind, **dadurch gekennzeichnet, dass** ein und dieselbe Bauform des Grundelements (15) für unterschiedliche Anwendungsfälle einsetzbar ist, wobei das Grundelement voneinander unabhängige, für den jeweiligen Anwendungsfall etwa baukastenartig fakultativ bestückbare Aufnahmemittel (16, 17, 18, 23, 32, 33, 44) aufweist, welche die Halterung von Lagerelementen für die Tragstange (11a, 11b) sowie die Halterung von Verstellelementen (22, 34, 35), zur Vertikal- und / oder zur Horizontal- und / oder zur Neigeverstellung, gestatten.

2. Kopfstütze nach Anspruch 1, **dadurch gekennzeichnet, dass** das Grundelement (15) zusätzliche Aufnahmemittel zur Halterung von Funktionselementen, wie Kopfstützen-Airbag oder Lautsprecher, aufweist.

3. Kopfstütze nach Anspruch 1 oder 2, **dadurch gekennzeichnet, dass** das Grundelement (15) eine Lagervorrichtung (16a, 16b) für die Tragstange (11a, 11b) aufweist, die zugleich eine starre Aufnahme sowie eine bewegliche Aufnahme der Tragstangen (11a, 11b) innerhalb des Grundelements (15) zur Höhenverstellung der Kopfstütze (10) ermöglicht.

4. Kopfstütze nach Anspruch 3, **dadurch gekennzeichnet, dass** die Lagervorrichtung von wenigstens einer am Grundelement einstückig angeformten Lagerhülse (16a, 16b) gebildet ist.

5. Kopfstütze nach einem der vorangehenden Ansprüche, **dadurch gekennzeichnet, dass** das Grundelement (15) Aufnahmemittel (23) für erste Arretierungsmittel (24, 26, 25, 27) aufweist, mit denen der Polsterträger (13) auf den Tragstangen (11 a, 11 b) in gewünschter Höhe arretierbar ist.

6. Kopfstütze nach Anspruch 5, **dadurch gekennzeichnet, dass** die Arretierungsmittel (24, 26, 25, 27) von Rastelementen (24, 25) gebildet sind, die mit Rastkerben (26, 27) der Tragstangen zusammenwirken.

7. Kopfstütze nach einem der vorangehenden Ansprüche, **dadurch gekennzeichnet, dass** das Grundelement (15) Formschlussmittel (36, 37) aufweist, die ein Verdrehen der Tragstangen (11a, 11b) innerhalb des Grundelements (15) verhindern.

8. Kopfstütze nach Anspruch 7, **dadurch gekennzeichnet, dass** die Formschlussmittel von einer Nut-/Federverbindung (36, 37) gebildet sind.

9. Kopfstütze nach einem der vorangehenden Ansprüche, **dadurch gekennzeichnet, dass** das Grundelement (15) Aufnahmemittel (17, 18) zur starren sowie zur in Sitzrichtung beweglichen Lagerung zumindest eines Teils des Polsterträgers (13) aufweist.

10. Kopfstütze nach Anspruch 9, **dadurch gekennzeichnet, dass** die Aufnahmemittel von wenigstens einer Öffnung (17a, 17b, 17c) im Grundelement gebildet ist, wobei die Öffnung koaxial von einer Lagervorrichtung (18a, 18b, 18c) für eine säulenartige Haltestange (14a, 14b, 14c) umgeben ist.

11. Kopfstütze nach Anspruch 10, **dadurch gekennzeichnet, dass** die Lagervorrichtung von einer am Grundelement (15) angeformten Lagerhülse (18a, 18b, 18c) gebildet ist.

12. Kopfstütze nach einem der vorangehenden Ansprüche, **dadurch gekennzeichnet, dass** der Polsterträger Aufnahmemittel (23) für zweite Arretierungsmittel (21) aufweist, mit welchen das Polsterträgerteil in einer gewünschten Position in Sitzrichtung am Grundelement (15) feststellbar ist.

13. Kopfstütze nach Anspruch 12, **dadurch gekennzeichnet, dass** die zweiten Arretierungsmittel von Rastelementen (21) gebildet sind, die mit Rastkerben (20) von säulenartigen Haltestangen (14a, 14b, 14c) zusammenwirken, welche an dem Polsterträger (13) befestigt sind.

14. Kopfstütze nach einem der vorangehenden Ansprüche, **dadurch gekennzeichnet, dass** erste Arretierungsmittel (24, 25) des Grundelements, mit denen der Polsterträger (13) auf den Tragstangen (11a, 11b) in gewünschter Höhe arretierbar ist und / oder zweite (21) Arretierungsmittel, mit welchen das Polsterträger in einer gewünschten Position in Sitzrichtung am Grundelement (15) feststellbar ist, einem Rastschieber (22) zugeordnet sind.

15. Kopfstütze nach Anspruch 14, **dadurch gekennzeichnet, dass** das Grundelement (15) eine Aufnahmevorrichtung (23) aufweist, in welcher der Rastschieber (22) geführt aufgenommen ist.

16. Kopfstütze nach Anspruch 15, **dadurch gekennzeichnet, dass** die Aufnahmevorrichtung (23) im Grundelement (15) derart ausgebildet ist, dass der Rastschieber (22) zwischen drei Positionen im Grundelement (15) bewegbar ist, wobei sich in einer ersten Position die Rastmittel (24, 26) zum Arretieren der Tragstangen (11a, 11b) und die Rastmittel (21,20) zum Arretieren der Haltestangen (14a, 14b) in Eingriff befinden und wobei sich in einer zweiten Position die Rastmittel (24, 26, 25, 27) zum Arretieren der Tragstangen außer Eingriff und die Rastmittel (21,20) zum Arretieren der Haltestangen (14a, 14b) in Eingriff befinden und wobei sich in einer dritten Position die Rastmittel (25, 27) zum Arretieren der Tragstangen (11a, 11b) in Eingriff und die Rastmittel (21,20) zum Arretieren der Haltestangen (14a, 14b) außer Eingriff befinden.

17. Kopfstütze nach einem der vorangehenden Ansprüche, **dadurch gekennzeichnet, dass** das Grundelement (15) Aufnahmemittel (32, 33) für wenigstens eine Verstellvorrichtung (34, 35) aufweist, welche ein automatisches Verstellen der Kopfstütze in der Höhe, in Sitzrichtung oder ein Neigen der Kopfstütze (10) ermöglichen.

18. Kopfstütze nach Anspruch 17, **dadurch gekennzeichnet, dass** die Verstellvorrichtung (34) Mittel zum Arretieren des Grundelements (15) in der gewünschten Höhe aufweist.

19. Kopfstütze nach Anspruch 17 oder Anspruch 18, **dadurch gekennzeichnet, dass** die Verstellvorrichtung ein von einem Elektromotor (34, 35) angetriebenes Ritzel umfasst, welches mit einer Verzahnung zusammenwirkt, die wenigstens mittelbar am angetriebenen Element, wie Tragstange (11 a, 11 b) oder Führungsstange (14a, 14b, 14c) angeordnet ist.

20. Kopfstütze nach einem der vorangehenden Ansprüche, **dadurch gekennzeichnet, dass** die Tragstangen (11a, 11b) aus einem Werkstoffverbund gebildet sind, wobei jede der Tragstangen (11a, 11 b) einen Metallkern (46) aufweist, welcher von einem Kunststoffmantel (47) umgeben ist.

21. Kopfstütze nach Anspruch 20, **dadurch gekennzeichnet, dass** zwischen Metallkern (46) und Kunststoffmantel (47) eine Verdrehsicherung vorgesehen ist.

22. Kopfstütze nach Anspruch 21, **dadurch gekennzeichnet, dass** die Verdrehsicherung von komplementären, zusammenwirkenden Strukturen in Metallkern (46) und Kunststoffmantel (47) gebildet sind.

23. Kopfstütze nach einem der vorangehenden Ansprüche, **dadurch gekennzeichnet, dass** die Tragstangen (11a, 11b) mittels einer Dreipunktlagerung in den Aufnahmemitteln (16a, 16b) des Grundelements (15) gelagert sind.

24. Kopfstütze nach einem der vorangehenden Ansprüche, **dadurch gekennzeichnet, dass** das Grundelement (15) von einem biegesteifen im Wesentlichen flächigen Bauteil gebildet ist.

25. Kopfstütze nach einem der vorangehenden Ansprüche, **dadurch gekennzeichnet, dass** das Grundelement (15) als Kunststoff- oder als Kunststoffverbundformteil ausgebildet ist.

26. Kopfstütze nach einem der vorangehenden Ansprüche, **dadurch gekennzeichnet, dass** wenigstens ein Aufnahmemittel unbestückt bleibt.

27. Kopfstützensystem, umfassend Kopfstützen nach einem der vorangehenden Ansprüche, **dadurch gekennzeichnet, dass** bei einer ersten Kopfstütze des Kopfstützensystems alle Aufnahmemittel bestückt sind und bei einer zweiten Kopfstütze des Kopfstützensystems wenigstens ein Aufnahmemittel unbestückt bleibt.

## Claims

1. Headrest (10) for vehicle seats, which headrest can be held, by means of at least one carrying bar (11a, 11b), on the backrest of a vehicle seat and optionally has a cushion-carrier (13) and also a cushion (12) for the passenger's head, wherein the headrest (10) is provided with a base element (15) on which the carrying bars (11a, 11b), and optionally the cushion-carrier (13), are arranged, **characterised in that** one and the same structural shape of the base element (15) can be used for different applications, the base element having receiving means (16, 17, 18, 23, 32, 33, 44) which are independent of one another and can be fitted with equipment in an optional manner, for instance modularly, for the particular application, and which make it possible to support mounting elements for the carrying bars (11a, 11b) and also to support adjusting elements (22, 34, 35) for the purpose of vertical and/or horizontal adjustment and/or adjustment of inclination.

2. Headrest according to Claim 1, **characterised in that** the base element (15) has additional receiving means for supporting functional elements, such as a headrest airbag or loudspeaker.

3. Headrest according to Claim 1 or 2, **characterised in that** the base element (15) has a mounting device (16a, 16b) for the carrying bar (11a, 11b) which permits, at the same time, rigid reception and also movable reception of the carrying bars (11a, 11b) inside said base element (15) for the purpose of adjusting the height of the headrest (10).

4. Headrest according to Claim 3, **characterised in that** the mounting device is constituted by at least one mounting sleeve (16a, 16b) which is formed onto the base element in one piece.

5. Headrest according to one of the preceding claims, **characterised in that** the base element (15) has receiving means (23) for first locking means (24, 26, 25, 27) with the aid of which the cushion-carrier (13) can be locked at the desired height on the carrying bars (11a, 11b).

6. Headrest according to Claim 5, **characterised in that** the locking means (24, 26, 25, 27) are constituted by latching elements (24, 25) which interact with latching notches (26, 27) in the carrying bars.

7. Headrest according to one of the preceding claims, **characterised in that** the base element (15) has form-locking means (36, 37) which prevent twisting of the carrying bars (11a, 11b) inside the base element (15).

8. Headrest according to Claim 7, **characterised in that** the form-locking means are constituted by a groove-and-tongue connection (36, 37).

9. Headrest according to one of the preceding claims, **characterised in that** the base element (15) has receiving means (17, 18) for the rigid mounting, and also the mounting in a manner which is movable in the direction of the seat, of at least part of the cushion-carrier (13).

10. Headrest according to Claim 9, **characterised in that** the receiving means is constituted by at least one aperture (17a, 17b, 17c) in the base element, said aperture being surrounded coaxially by a mounting device (18a, 18b, 18c) for a pillar-like supporting bar (14a, 14b, 14c).

11. Headrest according to Claim 10, **characterised in that** the mounting device is constituted by a mounting sleeve (18a, 18b, 18c) formed onto the base element (15).

12. Headrest according to one of the preceding claims, **characterised in that** the cushion-carrier has receiving means (23) for second locking means (21) with the aid of which the cushion-carrier part can be immobilised on the base element (15) in a desired position in the direction of the seat.

13. Headrest according to Claim 12, **characterised in that** the second locking means are constituted by latching elements (21) which interact with latching notches (20) belonging to pillar-like supporting bars (14a, 14b, 14c) which are fastened to the cushion-carrier (13).

14. Headrest according to one of the preceding claims, **characterised in that** first locking means (24, 25) belonging to the base element, with the aid of which locking means the cushion-carrier (13) can be locked at the desired height on the carrying bars (11a, 11b), and/or second (21) locking means, with the aid of which the cushion-carrier can be immobilised on the base element (15) in a desired position in the direction of the seat, are associated with a latching slide (22).

15. Headrest according to Claim 14, **characterised in that** the base element (15) has a receiving device (23) in which the latching slide (22) is received in a guided manner.

16. Headrest according to Claim 15, **characterised in that** the receiving device (23) in the base element (15) is constructed in such a way that the latching slide (22) can be moved between three positions within said base element (15), wherein, in a first position, the latching means (24, 26) for locking the carrying bars (11a, 11b) and the latching means (21, 20) for locking the supporting bars (14a, 14b) are in engagement, and wherein, in a second position, the latching means (24, 26, 25, 27) for locking the carrying bars are out of engagement and the latching means (21, 20) for locking the supporting bars (14a, 14b) are in engagement, and wherein, in a third position, the latching means (25, 27) for locking the carrying bars (11a, 11b) are in engagement and the latching means (21, 20) for locking the supporting bars (14a, 14b) are out of engagement.

17. Headrest according to one of the preceding claims, **characterised in that** the base element (15) has receiving means (32, 33) for at least one adjusting device (34, 35) which permit automatic adjustment of the headrest in height, in the direction of the seat, or inclination of said headrest (10).

18. Headrest according to Claim 17, **characterised in that** the adjusting device (34) has means for locking the base element (15) at the desired height.

19. Headrest according to Claim 17 or 18, **characterised in that** the adjusting device comprises a pinion which is driven by an electric motor (34, 35) and which interacts with a toothing system which is arranged, at least indirectly, on the driven element such as a carrying bar (11a, 11b) or guide bar (14a, 14b, 14c).

20. Headrest according to one of the preceding claims, **characterised in that** the carrying bars (11a, 11b) are formed from a combination of materials, each of said carrying bars (11a, 11b) having a metal core (46) which is surrounded by a plastic sheath (47).

21. Headrest according to Claim 20, **characterised in that** an anti-twisting arrangement is provided between the metal core (46) and the plastic sheath (47).

22. Headrest according to Claim 21, **characterised in that** the anti-twisting arrangement is constituted by complementary, interacting structures in the metal core (46) and plastic sheath (47).

23. Headrest according to one of the preceding claims, **characterised in that** the carrying bars (11a, 11b) are mounted, by means of a three-point mounting, in the receiving means (16a, 16b) belonging to the base element (15).

24. Headrest according to one of the preceding claims, **characterised in that** the base element (15) is constituted by a substantially laminar component which is resistant to bending.

25. Headrest according to one of the preceding claims, **characterised in that** the base element (15) is constructed as a plastic or plastic composite moulded part.

26. Headrest according to one of the preceding claims, **characterised in that** at least one receiving means remains without equipment.

27. Headrest system comprising headrests according to one of the preceding claims, **characterised in that**, in a first headrest belonging to the headrest system, all the receiving means are fitted with equipment and, in a second headrest belonging to the headrest system, at least one receiving means remains without equipment.

## Revendications

1. Appui-tête (10) pour des sièges de véhicule, lequel peut être maintenu avec au moins une barre de support (11a, 11b) au niveau du dossier d'un siège de véhicule et présente, le cas échéant, un support de rembourrage (13) ainsi qu'un rembourrage (12) pour la tête du passager, l'appui-tête (10) étant muni d'un élément de base (15) au niveau duquel sont disposés la barre de support (11a, 11b) et, le cas échéant, le support de rembourrage (13), **caractérisé en ce qu'**un et la même construction de l'élément de base (15) peuvent être employés pour différents types d'utilisation, l'élément de base présentant des moyens de logement (16, 17, 18, 23, 32, 33, 44) pouvant être équipés de façon facultative et indépendamment les uns des autres pour les applications respectives, par exemple à la manière d'un jeu de construction, lesquels permettent le maintien d'éléments de support pour la barre de support (11 a, 11 b) ainsi que le maintien d'éléments de réglage (22, 34, 35), pour le réglage vertical et/ou le réglage horizontal et/ou le réglage de l'inclinaison.

2. Appui-tête selon la revendication 1, **caractérisé en ce que** l'élément de base (15) présente des moyens de logement supplémentaires pour maintenir des éléments de fonctionnement, comme l'airbag appui-tête ou le haut-parleur.

3. Appui-tête selon la revendication 1 ou 2, **caractérisé en ce que** l'élément de base (15) présente un dispositif de support (16a, 16b) pour la barre de support (11a, 11b) qui permet à la fois un logement rigide ainsi qu'un logement mobile des barres de support (11 a, 11 b) au sein de l'élément de base (15) pour le réglage en hauteur de l'appui-tête (10).

4. Appui-tête selon la revendication 3, **caractérisé en ce que** le dispositif de support est formé d'au moins une douille-support (16a, 16b) formée en une pièce au niveau de l'élément de support.

5. Appui-tête selon l'une des précédentes revendications, **caractérisé en ce que** l'élément de base (15) présente des moyens de logement (23) pour des premiers moyens d'arrêt (24, 26, 25, 27) avec lesquels le support de rembourrage (13) peut être arrêté sur les barres de support (11 a, 11 b) à la hauteur souhaitée.

6. Appui-tête selon la revendication 5, **caractérisé en ce que** les moyens d'arrêt (24, 26, 25, 27) sont formés d'éléments d'encliquetage (24, 25) qui concourent avec des crans (26, 27) des barres de support.

7. Appui-tête selon l'une des précédentes revendications, **caractérisé en ce que** l'élément de base (15) présente des moyens de liaison par complémentarité de forme (36, 37) qui empêchent les barres de support (11 a, 11 b) de se tourner dans l'élément de base (15).

8. Appui-tête selon la revendication 7, **caractérisé en ce que** les moyens de liaison par complémentarité de forme sont formés d'une jonction à rainure et languette (36, 37).

9. Appui-tête selon l'une des précédentes revendications, **caractérisé en ce que** l'élément de base (15) présente des moyens de logement (17, 18) pour raidissement et pour le support mobile en direction de l'assise d'au moins une partie du support de rembourrage (13).

10. Appui-tête selon la revendication 9, **caractérisé en ce que** les moyens de logement sont formés d'au moins une ouverture (17a, 17b, 17c) dans l'élément de base, l'ouverture étant entourée coaxialement d'un dispositif de support (18a, 18b, 18c) pour une barre de retenue (14a, 14b, 14c) de type colonne.

11. Appui-tête selon la revendication 10, **caractérisé en ce que** le dispositif de support est formé d'une douille-support (18a, 18b, 18c) formée au niveau de l'élément de base (15).

12. Appui-tête selon l'une des précédentes revendications, **caractérisé en ce que** le support de rembourrage présente des moyens de logement (23) pour deux moyens d'arrêt (21) avec lesquels la partie du support de rembourrage peut être bloquée dans une position souhaitée dans le sens de l'assise au niveau de l'élément de base (15).

13. Appui-tête selon la revendication 12, **caractérisé en ce que** les deux moyens d'arrêt sont formés d'éléments d'encliquetage (21) qui concourent avec des crans (20) des barres de retenue (14a, 14b, 14c) de type colonne, lesquelles sont fixées au niveau du support de rembourrage (13).

14. Appui-tête selon l'une des précédentes revendications, **caractérisé en ce que** le premier moyen d'arrêt (24, 25) de l'élément de base avec lequel le support de rembourrage (13) peut être arrêté sur les barres de support (11a, 11b) à la hauteur souhaitée et/ou le deuxième moyen d'arrêt (21), avec lequel le support de rembourrage peut être bloqué dans une position souhaitée dans le sens de l'assise au niveau de l'élément de base (15), sont associés à un coulisseau à encliquetage (22).

15. Appui-tête selon la revendication 14, **caractérisé en ce que** l'élément de base (15) présente un dispositif de logement (23) dans lequel le coulisseau à encliquetage (22) est logé guidé.

16. Appui-tête selon la revendication 15, **caractérisé en ce que** le dispositif de logement (23) est conçu dans l'élément de base (15), de telle sorte que le coulisseau à encliquetage (22) peut être mobile entre trois positions dans l'élément de base (15), dans une première position, les moyens d'encliquetage (24, 26) pour arrêter les barres de support (11 a, 11 b) et les moyens d'encliquetage (21, 20) pour arrêter les barres de retenue (14a, 14b) se trouvant en prise, dans une deuxième position, les moyens d'encliquetage (24, 26, 25, 27) pour arrêter les barres de support se trouvant hors prise et les moyens d'encliquetage (21, 20) pour arrêter les barres de retenue (14a, 14 b) en prise, et, dans une troisième position, les moyens d'encliquetage (25, 27) pour arrêter les barres de support (11a, 11 b) se trouvant en prise et les moyens d'encliquetage (21, 20) pour arrêter les barres de retenue (14a, 14b), hors prise.

17. Appui-tête selon l'une des précédentes revendications, **caractérisé en ce que** l'élément de base (15) présente des moyens de logement (32, 33) pour au moins un dispositif de réglage (34, 35), permettant un réglage automatique de l'appui-tête en hauteur, dans le sens de l'assise ou une inclinaison de l'appui-tête (10).

18. Appui-tête selon la revendication 17, **caractérisé en ce que** le dispositif de réglage (34) présente des moyens pour arrêter l'élément de base (15) à la hauteur souhaitée.

19. Appui-tête selon la revendication 17 ou la revendication 18, **caractérisé en ce que** le dispositif de réglage comprend un pignon entraîné par un moteur électrique (34, 35), lequel concoure avec une denture qui est disposée au moins indirectement au niveau de l'élément entraîné, comme la barre de support (11a, 11b) ou la barre de guidage (14a, 14b, 14c).

20. Appui-tête selon l'une des précédentes revendications, **caractérisé en ce que** les barres de support (11 a, 11 b) sont en matériau composite, chacune des barres de support (11 a, 11 b) présentant un noyau métallique (46), lequel est entouré d'une enveloppe en matière plastique (47).

21. Appui-tête selon la revendication 20, **caractérisé en ce qu'**il est prévu un blocage en rotation entre le noyau métallique (46) et l'enveloppe en matière plastique (47).

22. Appui-tête selon la revendication 21, **caractérisé en ce que** le blocage en rotation est formé de structures concourantes et complémentaires, dans le noyau métallique (46) et l'enveloppe en matière plastique (47).

23. Appui-tête selon l'une des précédentes revendications, **caractérisé en ce que** les barres de support (11 a, 11 b) sont placées au moyen d'un support en trois points dans les moyens de logement (16a, 16b) de l'élément de base (15).

24. Appui-tête selon l'une des précédentes revendications, **caractérisé en ce que** l'élément de base (15) est formé d'un composant plat et essentiellement rigide à la flexion.

25. Appui-tête selon l'une des précédentes revendications, **caractérisé en ce que** l'élément de base (15) est conçu en tant que pièce de formage composite en matière synthétique ou en tant que pièce moulée en plastique.

26. Appui-tête selon l'une des précédentes revendications, **caractérisé en ce qu'**au moins un moyen de logement reste dégarni.

27. Système d'appui-tête avec appui-tête selon l'une des précédentes revendications, **caractérisé en ce que** pour un premier appui-tête du système d'appui-tête, tous les moyens de logement sont garnis et que pour un deuxième appui-tête du système d'appui-tête, au moins un moyen de logement reste dégarni.
